# EUROPEAN PATENT APPLICATION

(11) **EP 2 357 332 A1**
(43) Date of publication of application: **17.08.2011**
(21) Application number: 09831909.8
(22) Date of filing: 08.12.2009
(51) Int. Cl.: F01N 3/08, B01D 53/86, B01D 53/94, F01N 3/02, F01N 3/24

(54) **EXHAUST GAS PURIFYING DEVICE**

(30) Priority: 08.12.2008 JP 2008312637
(71) Applicant: Mitsubishi Heavy Industries, Ltd., Tokyo 108-8215 (JP)
(72) Inventor: FUJINAGA, Takashi, Kobe, Hyogo-ken 652-8585 (JP); TANOURA, Masazumi, Yokohama, Kanagawa-ken 236-8515 (JP); UENO, Daishi, Tokyo 108-8215 (JP); MITSUYAMA, Yasushi, Tokyo 108-8215 (JP)
(74) Representative: Intès, Didier Gérard André
(86) International application number: PCT/JP2009/070564
(87) International publication number: WO 2010/067805

(57) **Abstract**

An object of the present invention is to provide a flue gas purifying device that can suppress leakage of ammonia and can efficiently decrease nitrogen oxides in flue gas. The object is achieved by including: an exhaust pipe that guides flue gas discharged from an internal combustion engine; a urea-water injecting unit that injects urea water into the exhaust pipe; a catalyst unit that includes a urea SCR catalyst that promotes a reaction between ammonia produced from injected urea water and nitrogen oxides and a support mechanism arranged inside of the exhaust pipe on a downstream side to a position where urea water is injected in a flow direction of the flue gas to support the urea SCR catalyst; an ammonia-concentration measuring unit that measures an ammonia concentration in flue gas at a measurement position in a region where the SCR catalyst is arranged; and an injection control unit that controls injection of urea water based on a measurement result acquired by the ammonia-concentration measuring unit.

## Description

### Field

The present invention relates to a flue gas purifying device that reduces nitrogen oxides discharged from an internal combustion engine.

### Background

Gas discharged from an internal combustion engine such as a diesel engine, a gasoline engine, and a gas turbine, that is flue gas, contains nitrogen oxides (NOx) and particulate matters (PM). Therefore, a device that decreases particulate matters or a device that decreases nitrogen oxides is provided in an exhaust pipe of an internal combustion engine. As an example of the device that decreases nitrogen oxides, there is a device that decreases nitrogen oxides from flue gas by injecting urea into an exhaust pipe that guides flue gas, produces ammonia from urea in the exhaust pipe, causes the produced ammonia to react with nitrogen oxides in flue gas, and then removes oxygen from nitrogen oxides to produce nitrogen again.

For example, Patent Literature 1 describes a flue gas purifying device in which a DPF device and a selective catalytic reduction catalytic device are sequentially arranged from an upstream side in an exhaust path of an internal combustion engine. Patent Literature 1 also describes a device that calculates NOx emissions, at the time of a normal operation, based on an NOx emissions map for the normal operation, or at the time of forced regeneration of the DPF device, calculates NOx emissions based on an NOx emissions map for forced regeneration, to calculate a feed rate of ammonia aqueous solution corresponding to the calculated NOx emissions, and feeds ammonia aqueous solution into flue gas on an upstream side of the selective catalytic reduction catalytic device so as to reach the calculated feed rate.

Further, Patent Literature 2 describes NOx removal equipment for flue gas discharged from a combustion plant such as a waste incinerator, although it is not for treatment of flue gas from an internal combustion engine. Patent Literature 2 describes a denitration control method in which a NOx concentration in gas before treatment, an ammonia concentration in treated flue gas, a NOx concentration in flue gas, and a flow rate of flue gas are measured, to calculate a flow rate of NOx before treatment, a NOx concentration after treatment, a record of NOx removal efficiency by NOx removal equipment, and an ammonia concentration in treated flue gas based on a measurement result thereof, deviations between the calculated values and target values thereof are respectively calculated to thereby calculate correction values based on the calculated deviations, and a corrected flow rate of NOx is calculated based on at least one of the calculated correction values, thereby controlling a flow rate of ammonia to be injected into flue gas before treatment based on the calculated corrected flow rate of NOx.

### Citation List

### Patent Literatures

Patent Literature 1: Japanese Patent Application Laid-open No. 2007-154849
Patent Literature 2: Japanese Patent Application Laid-open No. 2005-169331

### Summary

### Technical Problem

Nitrogen oxides can be decreased and an amount of ammonia can be adjusted by controlling an injection amount of urea based on a map created beforehand as described in Patent Literature 1, or by controlling an injection amount of urea based on the concentration of nitrogen oxides or the ammonia concentration in treated flue gas, as described in Patent Literature 2.

However, even if the injection amount of urea is adjusted based on a map created beforehand, there is a problem that nitrogen oxides leak or ammonia leak according to operating conditions. Further, even when the injection amount of urea is adjusted based on the concentration of nitrogen oxides or the ammonia concentration in treated flue gas, if ammonia still remains in treated flue gas, which is a detection target, there is a problem of ammonia leakage. Therefore, in flue gas purifying devices of an internal combustion engine, an oxidation catalyst for oxidizing ammonia is installed on a downstream side of NOx removal equipment such as a selective catalytic reduction catalytic device. However, there is a problem such that nitrogen oxides are produced by oxidizing ammonia. Further, there is also a problem such that, if the amount of leakage of ammonia is large, the oxidation catalyst needs to be increased.

The present invention has been achieved to solve the above problems, and an object of the present invention is to provide a flue gas purifying device that calculates an appropriate amount of a reducing agent (ammonia) such as urea to be injected into an exhaust pipe so that ammonia hardly leaks to a downstream side, thereby efficiently decreasing nitrogen oxides in flue gas.

### Solution to Problem

According to an aspect of the present invention, a flue gas purifying device that reduces nitrogen oxides contained in flue gas discharged from an internal combustion engine includes: an exhaust pipe that guides flue gas discharged from the internal combustion engine; an ammonia supplying unit that supplies ammonia into the exhaust pipe; a catalyst unit that includes an SCR catalyst that promotes a reaction between supplied ammonia and the nitrogen oxides and a support mechanism arranged inside of the exhaust pipe to support the SCR catalyst in the exhaust pipe, and is arranged on a downstream side to a position where the ammonia is supplied in a flow direction of the flue gas; an ammonia-concentration measuring unit that measures an ammonia concentration in flue gas at a measurement position in a region where the catalyst unit is arranged; and an injection control unit that controls supply of ammonia performed by the ammonia supplying unit based on a measurement result acquired by the ammonia-concentration measuring unit.

According to another aspect of the present invention, a flue gas purifying device that reduces nitrogen oxides contained in flue gas discharged from an internal combustion engine includes: an exhaust pipe that guides flue gas discharged from the internal combustion engine; a urea-water injecting unit that injects urea water into the exhaust pipe; a catalyst unit that includes a urea SCR catalyst that promotes a reaction between ammonia produced from injected urea water and the nitrogen oxides and a support mechanism arranged inside of the exhaust pipe to support the urea SCR catalyst in the exhaust pipe, and is arranged on a downstream side to a position where the urea water is injected in a flow direction of the flue gas; an ammonia-concentration measuring unit that measures an ammonia concentration in flue gas at a measurement position in a region where the catalyst unit is arranged; and an injection control unit that controls injection of urea water performed by the urea-water injecting unit based on a measurement result acquired by the ammonia-concentration measuring unit.

Advantageously, in the flue gas purifying device, the ammonia-concentration measuring unit detects an ammonia concentration at a position included in a region extending from a position where a concentration of nitrogen oxides at a time of maximum load of the internal combustion engine when nitrogen oxides in flue gas are reduced in a state with ammonia being input excessively into the urea SCR catalyst becomes either a concentration at an inlet of the urea SCR catalyst at a time of minimum load of the internal combustion engine or a concentration half a concentration at the inlet of the urea SCR catalyst at the time of maximum load of the internal combustion engine, whichever higher, to a position where the concentration of nitrogen oxides at the time of maximum load of the internal combustion engine becomes a theoretical concentration of nitrogen oxides that can be denitrated with an ammonia concentration of 10 ppm, of a region of the catalytic unit in which the urea SCR catalyst is arranged, in a flow direction of flue gas.

Advantageously, in the flue gas purifying device, the urea SCR catalyst in the catalyst unit includes a first catalyst and a second catalyst that is arranged on a downstream side to the first catalyst in a flow direction of the flue gas, and the catalyst unit further includes a connecting pipe for connecting the first catalyst and the second catalyst, the ammonia-concentration measuring unit is arranged in the connecting pipe, and the measurement position is in the connecting pipe.

Advantageously, the flue gas purifying device further includes a particulate-matter reducing unit arranged between the urea-water injecting unit and the internal combustion engine to reduce particulate matters contained in the flue gas.

Advantageously, the flue gas purifying device further includes a nitrogen-oxide-concentration measuring unit that measures a concentration of nitrogen oxides in flue gas at the measurement position.

### Advantageous Effects of Invention

The gas purifying device according to the present invention can accurately ascertain ammonia, which is reacting with nitrogen oxides by measuring an ammonia concentration in the catalyst unit, and the flue gas purifying device can suppress leakage of ammonia from the purifying device and can efficiently decrease nitrogen oxides in flue gas, by controlling an injection amount of urea, that is, an input amount of a reducing agent, based on the measurement result.

### Brief Description of Drawings

FIG. 1 is a block diagram of a schematic configuration of a vehicle including a diesel engine having a flue gas purifying device mounted thereon according to an embodiment of the present invention.
FIG. 2 is a block diagram of a schematic configuration of a concentration measuring unit in the flue gas purifying device shown in FIG. 1.
FIG. 3 is a graph of a relation between a length from an inlet of a urea SCR catalyst and the concentration of nitrogen oxides.
FIG. 4 is a block diagram of a schematic configuration of a vehicle including a diesel engine having a flue gas purifying device mounted thereon according to another embodiment of the present invention.
FIG. 5 is a graph of an example of a measurement result.
FIG. 6 is a graph of an example of a measurement result.
FIG. 7 is a graph of an example of a measurement result.
FIG. 8 is a graph of an example of a measurement result.

### Description of Embodiments

Exemplary embodiments a flue gas purifying device according to the present invention will be explained below in detail with reference to the accompanying drawings. The present invention is not limited to the embodiments. In the following embodiments, it is assumed that an internal combustion engine having the flue gas purifying device mounted thereon is a diesel engine, and a vehicle using the diesel engine is explained. However, the internal combustion engine is not limited thereto, and the present invention is applicable to various internal combustion engines such as a gasoline engine and a gas turbine. Further, a device having the internal combustion engine is not limited to a vehicle, and the device can be used as an internal combustion engine of various devices such as a ship and a power generator.

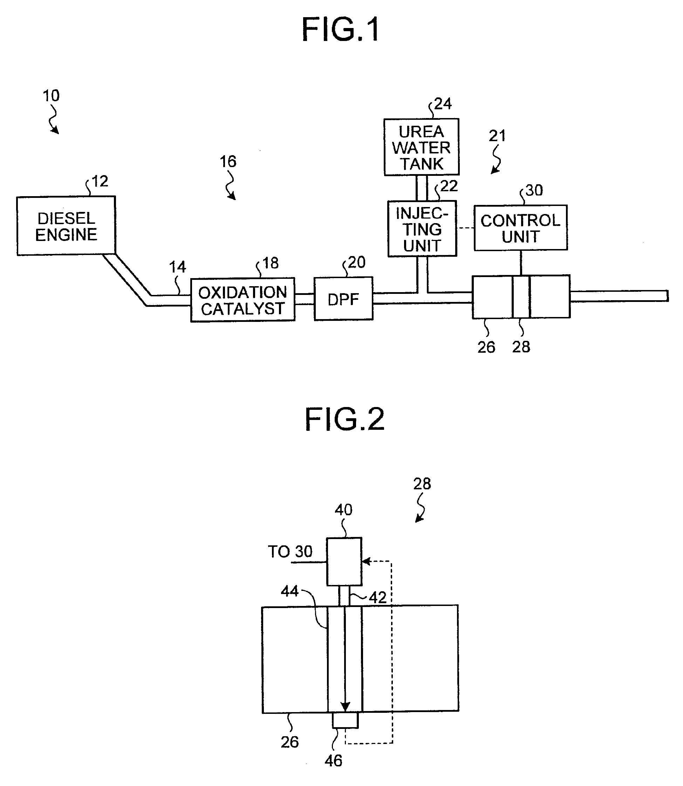

FIG. 1 is a block diagram of a schematic configuration of a vehicle including a diesel engine having a flue gas purifying device mounted thereon according to an embodiment of the present invention. FIG. 2 is a block diagram of a schematic configuration of a concentration measuring unit in the flue gas purifying device for a diesel engine shown in FIG. 1. As shown in FIG. 1, a vehicle 10 includes a diesel engine 12, an exhaust pipe 14 for guiding flue gas discharged from the diesel engine 12, and a flue gas purifying device 16 that purifies flue gas flowing in the exhaust pipe 14. The vehicle 10 also includes various elements required for a vehicle, such as wheels, a body, operating parts, and a transmission, other than constituent elements shown in FIG. 1.

The diesel engine 12 is an internal combustion engine that uses light oil or heavy oil as a fuel, and burns the fuel to extract power. The exhaust pipe 14 is connected to the diesel engine 12 at one end thereof, to guide flue gas discharged from the diesel engine 12.

The flue gas purifying device 16 includes an oxidation catalyst 18, a DPF 20, an injecting unit 22, a urea water tank 24, a urea SCR catalytic unit 26, a concentration measuring unit 28, and a control unit 30, and is arranged in an exhaust path of flue gas, that is, in the exhaust pipe 14 or adjacent to the exhaust pipe 14.

The oxidation catalyst 18 is a catalyst such as platinum provided in the exhaust path of flue gas, specifically, inside of a downstream portion of an exhaust port of the diesel engine 12 in a flow direction of flue gas in the exhaust pipe 14. A part of particulate matters (PM) in flue gas having passed in the exhaust pipe 14 and through the oxidation catalyst 18 is removed by the oxidation catalyst 18. The PM here is an air contaminant discharged from the diesel engine, and is a mixture of solid carbon particles, unburned hydrocarbon (Soluble Organic Fraction: SOF) formed of polymeric molecules, and sulfate generated by oxidation of sulfur contained in the fuel. The oxidation catalyst 18 oxidizes nitrogen monoxide contained in flue gas flowing in the exhaust pipe 14 to nitrogen dioxide.

The DPF (Diesel Particulate Filter) 20 is a filter provided in the exhaust path of flue gas, specifically, inside of a downstream portion of the oxidation catalyst 18 in the exhaust pipe 14, to trap particulate matters contained in flue gas having passed through the oxidation catalyst 18. As the DPF 20, it is desired to use a continuous-regenerative DPF that can maintain the trapping performance such that regeneration is performed by removing trapped PM by burning or the like.

A urea SCR (Selective Catalytic Reduction) system 21 is an NOx removal system that reduces nitrogen oxides (NO, NO₂) contained in flue gas, and includes the injecting unit 22, the urea water tank 24, and the urea SCR catalytic unit 26. The injecting unit 22 is an injection device that injects urea water into the exhaust pipe 14, and an injection port is provided in a portion on a downstream side to the DPF 20 in the exhaust pipe 14. The injecting unit 22 injects urea water into the exhaust pipe 14 from the injection port. The urea water tank 24 stores urea water, and supplies urea water to the injecting unit 22. A replenishing port for replenishing urea water from an external device that supplies urea water is provided in the urea water tank 24, and urea water is replenished according to need from the replenishing port. The urea SCR catalytic unit 26 includes a urea SCR catalyst, which is a urea selective reduction catalyst that promotes a reaction between ammonia produced from urea with nitrogen oxides, and a support mechanism provided inside of a downstream portion of the injecting unit 22 in the exhaust pipe 14 to support the urea SCR catalyst. Vanadium catalyst or zeolite catalyst can be used as the urea SCR catalyst. Further, the support mechanism is arranged inside the exhaust pipe 14, and a hole for aerating flue gas is formed therein, and the urea SCR catalyst is supported on the surface thereof.

The urea SCR system 21 has the configuration described above, and injects urea water into the exhaust pipe 14 by the injecting unit 22. The injected urea water becomes ammonia (NH₃) due to heat in the exhaust pipe 14. Specifically, ammonia is produced from urea water according to the following chemical reaction.

(NH₂)2CO+H₂O → 2NH₃+CO₂

Thereafter, produced ammonia flows in the exhaust pipe 14 together with flue gas and reaches the urea SCR catalytic unit 26. A part of urea water is not used for producing ammonia and reaches the urea SCR catalytic unit 26 in the state of urea water. Therefore, even in the urea SCR catalytic unit 26, ammonia is produced from urea water according to the reaction mentioned above. Ammonia having reached the urea SCR catalytic unit 26 reacts with nitrogen oxides contained in flue gas to remove oxygen from nitrogen oxides and is reduced to nitrogen. Specifically, nitrogen oxides are reduced according to the following chemical reaction.

4NH₃+4NO+O₂ → 4N₂+6H₂O

4NH₃+2NO₂+O₂ → 3N₂+6H₂O

The concentration measuring unit 28 is arranged in the urea SCR catalytic unit 26 in the exhaust path of flue gas, that is, in such a manner that an upstream face and a downstream face are both in contact with the urea SCR catalytic unit 26, to measure the ammonia concentration in flue gas flowing in the urea SCR catalytic unit 26. As shown in FIG. 2, the concentration measuring unit 28 includes a measuring unit body 40, an optical fiber 42, a measuring cell 44, and a light receiving unit 46.

The measuring unit body 40 has a light emitting unit that emits laser beams in a wavelength region absorbed by ammonia, and a computing unit that calculates the ammonia concentration from a signal. The measuring unit body 40 outputs laser beams to the optical fiber 42 and receives a signal received by the light receiving unit 46.

The optical fiber 42 guides laser beams output from the measuring unit body 40 so as to enter into the measuring cell 44.

The measuring cell 44 is arranged in the urea SCR catalytic unit 26, and includes an incident unit that causes light emitted from the optical fiber 42 to enter into the measuring cell 44, and an output unit that outputs laser beams having passed through a predetermined route in the measuring cell 44.

The light receiving unit 46 receives laser beams having passed through the inside of the measuring cell 44 and output from the output unit, and outputs an intensity of received laser beams to the measuring unit body 40 as a light receiving signal.

The concentration measuring unit 28 has the configuration described above, and laser beams output from the measuring unit body 40 pass through the predetermined route in the measuring cell 44 from the optical fiber 42 and is output from the output unit. At this time, if ammonia is contained in flue gas in the measuring cell 44, laser beams passing through the measuring cell 44 are absorbed. Therefore, an output of laser beams reaching the output unit changes according to the ammonia concentration in flue gas. The light receiving unit 46 converts laser beams output from the output unit to a light receiving signal, and outputs the light receiving signal to the measuring unit body 40. The measuring unit body 40 compares the intensity of output laser beams with an intensity calculated from the light receiving signal, to calculate the ammonia concentration in flue gas flowing in the measuring cell 44 based on its rate of diminution. Thus, the concentration measuring unit 28 uses TDLAS (Tunable Diode Laser Absorption Spectroscopy) to calculate or measure the ammonia concentration in flue gas passing through a predetermined position in the measuring cell 44, that is, a measurement position based on the intensity of output laser beams and the light receiving signal detected by the light receiving unit 46.

Only the incident unit and the output unit of the measuring cell 44 can be made of a light transmitting material, or the measuring cell 44 on the whole can be made of the light transmitting material. Further, at least two optical mirrors can be provided in the measuring cell 44, so that laser beams entering from the incident unit is multiply-reflected by the optical mirrors and output from the output unit. By multiply-reflecting laser beams, laser beams can pass through more regions in the measuring cell 44. Accordingly, an influence of concentration distribution on flue gas flowing in the measuring cell 44 can be decreased, thereby enabling accurate detection of concentrations.

The control unit 30 controls the amount of urea water to be injected from the injecting unit 22 and an injection timing based on a detection result of the concentration measuring unit 28. Specifically, when the ammonia concentration is lower than a predetermined value, the amount of urea water to be injected at a time is increased or an injection interval of urea water is decreased. When the ammonia concentration is higher than the predetermined value, the amount of urea water to be injected at a time is decreased or the injection interval of urea water is increased.

The vehicle 10 and the flue gas purifying device 16 have basically the configuration as described above. In the flue gas purifying device 16, flue gas discharged from the diesel engine 12 passes through the oxidation catalyst 18 and the DPF 20, and the PM contained in flue gas is trapped and decreased. Flue gas having passed through the DPF 20 flows in the exhaust pipe 14, and after urea water is injected from the injecting unit 22, flue gas passes through the urea SCR catalytic unit 26 together with urea water and ammonia produced from urea water. Because flue gas passes through the urea SCR catalytic unit 26 together with ammonia, nitrogen oxides contained in flue gas are decreased by the urea SCR system 21. Thereafter, flue gas is discharged to the air from the exhaust pipe 14. As described above, the flue gas purifying device 16 purifies the amount of urea water injected by the injecting unit 22 and the injection timing based on a measurement result obtained by measuring the ammonia concentration in flue gas, which passes through the predetermined position in the urea SCR catalytic unit 26, by the concentration measuring unit 28.

As described above, the vehicle 10 can decrease the PM in flue gas discharged from the diesel engine 12, reduce nitrogen oxides, and discharge flue gas in a state with harmful substance being decreased, by the flue gas purifying device 16 (for a diesel engine).

Further, the flue gas purifying device 16 measures the ammonia concentration in the urea SCR catalytic unit 26 and controls the injection amount of urea water according to the result thereof. In this manner, by controlling the injection amount of urea water based on the ammonia concentration in the urea SCR catalytic unit 26, the injection amount of urea water can be controlled according to the reaction state between ammonia and nitrogen oxides.

Specifically, the reaction state between ammonia and nitrogen oxides and percentage of ammonia adsorbed by the urea SCR catalytic unit 26 can be ascertained more accurately than by a measurement on an upstream side to the urea SCR catalytic unit 26. When a measurement is performed on a downstream side to the urea SCR catalytic unit 26, it means that ammonia is leaking at a point in time when ammonia is measured, and thus leakage of ammonia cannot be prevented. However, by measuring the ammonia concentration in the urea SCR catalytic unit 26, ammonia can be reacted with nitrogen oxides also on a downstream side to a measurement point so that ammonia is adsorbed by a urea SCR catalyst. Therefore, even if ammonia is detected at the measurement position, it can be suppressed that ammonia leaks to the downstream side to the urea SCR catalyst.

A reaction amount between nitrogen oxides and ammonia and an adsorption rate of ammonia change according to a plurality of factors such as a temperature and a concentration. Therefore, even if the injection amount of urea water is controlled based on a map created beforehand, the amount of ammonia may increase and leak, or may decrease and be insufficient for completely reducing nitrogen oxides, and nitrogen oxides may leak. However, by measuring the ammonia concentration at the measurement position in the urea SCR catalyst, the urea SCR catalytic unit 26 can control the injection amount of urea water more appropriately.

In the flue gas purifying device 16, an oxidation catalyst that oxidizes ammonia is normally provided on the downstream side to the urea SCR catalytic unit 26 so that ammonia does not leak into the air from the exhaust pipe 14. However, the oxidation catalyst can be decreased or does not need to be provided. Accordingly, the device configuration of the flue gas purifying device can be simplified more, and the weight thereof can be decreased. Further, by oxidizing ammonia, nitrogen oxides to be produced can be decreased or removed. As described above, although the flue gas purifying device 16 can suppress leakage of ammonia; however, it is desired to provide an oxidation catalyst that oxidizes ammonia on the downstream side to the urea SCR catalytic unit 26 in order to further decrease ammonia leaking to the air. Even if the oxidation catalyst is provided, because the flue gas purifying device 16 for a diesel engine can decrease the leaked amount of ammonia, in the flue gas purifying device 16, the oxidation catalyst can be further downsized and nitrogen oxides to be produced can be decreased more than those in conventional devices.

A target value of an ammonia concentration is preferably set to a value with buffer that is, a value that can realize such a state that ammonia can be absorbed by the urea SCR catalytic unit 26 on the downstream side to the concentration measuring unit 28 even if the ammonia concentration is higher than the target value, that is, when the ammonia concentration is the target value, a value that can realize such a state that the urea SCR catalytic unit 26 has a margin to absorb ammonia. By setting a value with buffer as the target value, it can be reliably prevented that ammonia leaks from the urea SCR catalytic unit 26.

It is desired here that the concentration measuring unit 28 measures an ammonia concentration at an arbitrary position in a region extending from a position where the concentration of nitrogen oxides at the time of maximum load of the diesel engine when nitrogen oxides in flue gas are reduced in a state with ammonia being input excessively into the urea SCR catalyst becomes either a concentration at an inlet of the urea SCR catalyst at the time of minimum load of the diesel engine or a concentration half the concentration at the inlet of the urea SCR catalyst at the time of maximum load of the internal combustion engine, whichever the higher, to a position where the concentration of nitrogen oxides at the time of maximum load of the diesel engine becomes a theoretical concentration of nitrogen oxides that can be denitrated with an ammonia concentration of 10 ppm, of a region of the urea SCR catalytic unit 26 in which the urea SCR catalyst is arranged, in a flow direction of flue gas. The case that nitrogen oxides in flue gas are reduced in a state with ammonia being input excessively into the urea SCR catalyst is a case when it is assumed that ammonia adsorbed by the urea SCR catalyst is saturated, and the input ammonia is not adsorbed by the urea SCR catalyst at the time of passing through the urea SCR catalyst and only nitrogen oxides are reduced. That is, it is a case that nitrogen oxides are reduced by the urea SCR catalyst at the maximum efficiency. Further, the theoretical concentration of nitrogen oxides that can be denitrated (that is, reducible) at the ammonia concentration of 10 ppm is a concentration of nitrogen oxides that can be denitrated in a state with ammonia being not adsorbed by the urea SCR catalyst and when an ammonia concentration in flue gas (air) is 10 ppm. Further, the position where the concentration of nitrogen oxides at the time of maximum load of the diesel engine when nitrogen oxides in flue gas are reduced in a state with ammonia being input excessively into the urea SCR catalyst becomes either the concentration at the inlet of the urea SCR catalyst at the time of minimum load of the diesel engine, or a concentration half the concentration at the inlet of the urea SCR catalyst at the time of maximum load of the internal combustion engine, whichever the higher, can be said to be a position where the concentration of nitrogen oxides at the time of maximum load of the diesel engine when nitrogen oxides in flue gas are reduced in a state with ammonia being input excessively into the urea SCR catalyst becomes the concentration at the inlet of the urea SCR catalyst at the time of minimum load of the diesel engine, or a position where the concentration of nitrogen oxides at the time of maximum load of the diesel engine when nitrogen oxides in flue gas are reduced in a state with ammonia being input excessively into the urea SCR catalyst becomes a concentration half the concentration at the inlet of the urea SCR catalyst, whichever the closer to the inlet of the urea SCR catalytic unit 26.

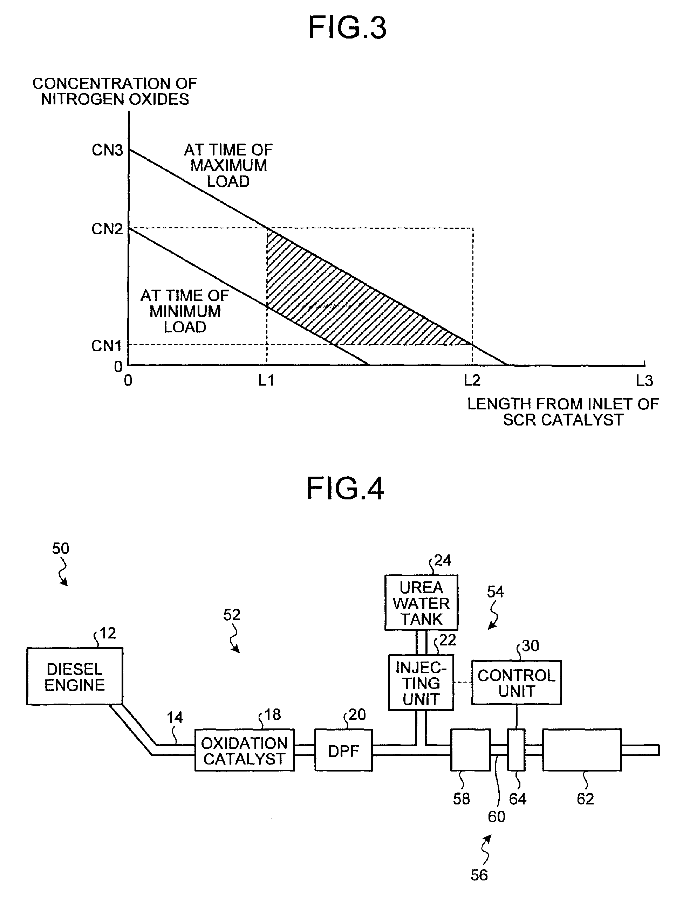

This configuration is explained below in more detail with reference to FIG. 3. FIG. 3 is a graph of a relation between a length from the inlet of the urea SCR catalyst and the concentration of nitrogen oxides. In FIG. 3, the length from the inlet of the urea SCR catalyst is plotted on a horizontal axis and the concentration of nitrogen oxides is plotted on a vertical axis. Further, FIG. 3 represents a result of calculation of the concentration of nitrogen oxides by simulation at respective positions of the urea SCR catalyst when nitrogen oxides in flue gas are reduced in a state where nitrogen oxides are discharged from the diesel engine with the maximum load, that is, with the highest concentration, and ammonia is input excessively into the urea SCR catalyst. FIG. 3 also represents a result of calculation of the concentration of nitrogen oxides by simulation at respective positions of the urea SCR catalyst when nitrogen oxides in flue gas are reduced in a state where nitrogen oxides are discharged from the diesel engine with the minimum load, that is, with the lowest concentration, and ammonia is input excessively into the urea SCR catalyst. L3 denotes a length from the inlet to an outlet of the urea SCR catalyst, that is, a whole length of the urea SCR catalyst. CN1 denotes a theoretical concentration of nitrogen oxides that can be denitrated when the ammonia concentration is assumed to be 10 ppm. CN2 denotes a concentration of nitrogen oxides at the inlet of the urea SCR catalyst at the time of minimum load, and CN3 denotes a concentration of nitrogen oxides at the inlet of the urea SCR catalyst at the time of maximum load. In FIG. 3, L1 is a position where the concentration of nitrogen oxides at the time of maximum load of the diesel engine, when nitrogen oxides in flue gas are reduced in a state with ammonia being input excessively into the urea SCR catalyst, becomes the concentration at the inlet of the urea SCR catalyst at the time of minimum load of the diesel engine. Further, L2 is a position where the concentration of nitrogen oxides at the time of maximum load of the diesel engine becomes the theoretical concentration of nitrogen oxides that can be denitrated with the ammonia concentration of 10 ppm. In FIG. 3, it is desirable that the concentration measuring unit 28 is arranged between L1 and L2. Specific values of these vales vary according to the device to be used.

An adsorption rate of ammonia adsorbed by the urea SCR catalyst in the urea SCR catalytic unit 26 and the reaction state between nitrogen oxides and ammonia can be ascertained more accurately, and appropriate buffer can be provided to the urea SCR catalytic unit 26, by measuring the ammonia concentration at the above position between L1 and L2 in FIG. 3, of the region where the urea SCR catalyst in the urea SCR catalytic unit 26 is arranged. Further, because the ammonia concentration in flue gas in a state with unreacted ammonia remaining to some extent can be measured, the ammonia concentration that can be easily measured can be set as a target value. Further, in the example shown in FIG. 3, CN2 denotes the concentration of nitrogen oxides at the inlet of the urea SCR catalyst at the time of minimum load. However, as described above, CN2 may be a concentration half the concentration at the inlet of the urea SCR catalyst at the time of maximum load. In this case, L1 becomes a position where the concentration of nitrogen oxides at the time of maximum load of the diesel engine, when nitrogen oxides in flue gas are reduced in a state with ammonia being input excessively into the urea SCR catalyst, becomes a concentration half the concentration at the inlet of the urea SCR catalyst at the time of maximum load. Thus, even if the concentration half the concentration at the inlet of the urea SCR catalyst at the time of maximum load is used as a reference, the same effect as those described above can be obtained. As described above, it is desired that CN2 is the higher concentration of two reference concentrations, and L1 is a position closer to the inlet of the urea SCR catalytic unit 26, of two positions. Even if the concentration of nitrogen oxides at the inlet of the urea SCR catalyst at the time of minimum load is extremely low, the ammonia concentration can be appropriately detected between L1 and L2 by using either the concentration of nitrogen oxides at the inlet of the urea SCR catalyst at the time of minimum load or a concentration half the concentration at the inlet of the urea SCR catalyst at the time of maximum load, whichever the higher, as a reference.

The control unit 30 preferably controls injection of urea water by the injecting unit 22 so that an ammonia concentration at an arbitrary position (hereinafter, also "reference position") becomes within a predetermined range. By setting the ammonia concentration at the reference position within the predetermined range, the amount of urea water to be injected into the exhaust pipe 14 can be made more appropriate, thereby enabling to further suppress leakage of ammonia from the exhaust pipe 14 and decrease nitrogen oxides more reliably. In this case, it is desired that the concentration measuring unit 28 measures the concentration at the reference position, of the region in which the urea SCR catalyst in the urea SCR catalytic unit 26 is arranged, and the control unit 30 controls injection of urea water by the injecting unit 22 based on a measurement result thereof. However, the present invention is not limited thereto, and the ammonia concentration at a position on an upstream side to the reference position can be measured, or the ammonia concentration at a position on a downstream side to the reference position can be measured. In this manner, when a point of the measurement of the ammonia concentration is different from the reference position, the ammonia concentration at the reference position can be calculated based on a separated distance. Further, a relation between the ammonia concentration at a position for measuring the ammonia concentration and the ammonia concentration at the reference position can be obtained beforehand by experiments.

It is also desirable that the control unit 30 adjusts the injection amount of urea so that the concentration of nitrogen oxides between L1 and L2, of the region in which the urea SCR catalyst in the urea SCR catalytic unit 26 is arranged, is equal to or higher than CN1 and equal to or lower than CN2, based on the measurement result by the concentration measuring unit 28. Specifically, it is desired that the control unit 30 sets a reference value or a reference range of an ammonia concentration at a measurement position, so that the concentration of nitrogen oxides at the measurement position is equal to or higher than the theoretical concentration of nitrogen oxides that can be denitrated with an ammonia concentration of 10 ppm, and is equal to or lower than a concentration of nitrogen oxides at the inlet of the urea SCR catalyst at the time of minimum load or a concentration half the concentration at the inlet of the urea SCR catalyst at the time of maximum load, whichever is higher. Further, it is desired to set the reference value or the reference range of the ammonia concentration at the measurement position so that the concentration of nitrogen oxides at respective positions is respectively within a hatched region in FIG. 3. Specifically, it is desired to set the reference value or the reference range of the ammonia concentration at the measurement position so that the concentration of nitrogen oxides between L1 and L2 at the measurement position is equal to or higher than CN1 and equal to or lower than CN2, and the concentration of nitrogen oxides at respective positions is, respectively, equal to or higher than a simulation result of the concentration of nitrogen oxides at the respective positions of the urea SCR catalyst when nitrogen oxides in flue gas are reduced at the time of minimum load and in a state with ammonia being input excessively into the urea SCR catalyst, and is equal to or lower than a simulation result of the concentration of nitrogen oxides at the respective positions of the urea SCR catalyst when nitrogen oxides in flue gas are reduced at the time of maximum load and in the state with ammonia being input excessively into the urea SCR catalyst. By setting the reference of the ammonia concentration at the measurement position so that the concentration of nitrogen oxides is within the predetermined rage, nitrogen oxides can be reduced more efficiently, while further decreasing leakage of ammonia. In FIG. 3, when the concentration at L1 and CN2 is the concentration of nitrogen oxides at the inlet of the urea SCR catalyst at the time of minimum load or a concentration half the concentration at the inlet of the urea SCR catalyst at the time of maximum load, whichever the higher, the positions of L1 and CN2 become different positions. Also in this case, in FIG. 3, only the positions of L1 and CN2 become different positions, and definition of other ranges is the same.

Further, the control unit 30 can change the target value of the ammonia concentration at the measurement position according to operating conditions such as accelerator opening, velocity, and engine speed, or can set it constant regardless of the operating conditions. When changing the target value according to the operating conditions, the control unit 30 can control the injection amount of urea water corresponding to an increase or decrease of the amount of nitrogen oxides contained in flue gas, thereby enabling to decrease nitrogen oxides more appropriately, and maintain the ammonia concentration at the measurement position at a value close to the target value. The same effects can be obtained when the target value is maintained constant to control the injection amount and injection timing of urea water based on a relation between the target value and the operating conditions. When the target value of the ammonia concentration is set constant regardless of the operating conditions, the operating conditions do not need to be detected, thereby enabling to decrease the number of measuring units, and simplify the device configuration of the flue gas purifying device. Further, because the target value does not need to be calculated according to conditions, control is simplified.

In the flue gas purifying device 16, the PM is trapped by the oxidation catalyst 18 and the DPF 20, to decrease the PM in flue gas; however, the present invention is not limited thereto. Various types of particulate-matter reducing apparatuses that reduce the PM can be used for the flue gas purifying device for a diesel engine, and, for example, only a filter for trapping the PM can be arranged without providing the oxidation catalyst.

In the flue gas purifying device 16, the concentration measuring unit 28 uses the TDLAS that outputs laser beams in a wavelength region absorbed by ammonia and detects an absorption rate of laser beams, to measure the ammonia concentration. However, the present invention is not limited thereto, and various measuring units that can measure the ammonia concentration in flue gas can be used. For example, a branch pipe can be provided at the measurement position, and a part of flue gas is made to flow into the branch pipe to measure the ammonia concentration in flue gas flowing in the branch pipe.

Further, in the flue gas purifying device 16, one urea SCR catalytic unit 26 is provided and the concentration measuring unit 28 is provided in the urea SCR catalytic unit 26, that is, in between the urea SCR catalytic unit 26; however, the present invention is not limited thereto. A flue gas purifying device for a diesel engine according to another embodiment of the present invention is explained below with reference to FIG. 4.

FIG. 4 is a block diagram of a schematic configuration of a vehicle including the flue gas purifying device according to another embodiment of the present invention. A vehicle 50 shown in FIG. 4 is the same as the vehicle 10, except for the configuration of a urea SCR system 54 in a flue gas purifying device 52, and therefore explanations of constituent elements identical to those of the vehicle 10 will be omitted, and features specific to the vehicle 50 are mainly explained below. The vehicle 50 shown in FIG. 4 includes the diesel engine 12, the exhaust pipe 14, and the flue gas purifying device 52. The flue gas purifying device 52 (for a diesel engine) includes the oxidation catalyst 18, the DPF 20, the injecting unit 22, the urea water tank 24, a urea SCR catalytic unit 56, a concentration measuring unit 64, and the control unit 30. The oxidation catalyst 18, the DPF 20, the injecting unit 22, the urea water tank 24, and the control unit 30 respectively have the same configuration as that in the flue gas purifying device 16 described above, and thus detailed explanations thereof will be omitted.

The urea SCR catalytic unit 56 includes a first catalyst 58, a connecting pipe 60, and a second catalyst 62. The first catalyst 58 and the second catalyst 62 respectively include a urea SCR catalyst, which is a urea selective reduction catalyst that promotes a reaction between ammonia produced from urea with nitrogen oxides, and a support mechanism that supports the urea SCR catalyst. The same catalyst can be used or a different catalyst can be used for the urea SCR catalyst of the first catalyst 58 and the second catalyst 62. The connecting pipe 60 is arranged between the first catalyst 58 and the second catalyst 62, to guide flue gas having passed through the first catalyst 58 to the second catalyst 62.

The concentration measuring unit 64 is installed in the connecting pipe 60, to measure the ammonia concentration in flue gas flowing in the connecting pipe 60. The configuration of the concentration measuring unit 64 is the same as that of the concentration measuring unit 28 except for the arrangement thereof, and thus detailed explanations thereof will be omitted.

The flue gas purifying device 52 has the configuration described above, in which flue gas discharged from the diesel engine 12 flows in the exhaust pipe 14, and passes through the oxidation catalyst 18 and the DPF 20, to decrease the PM. Thereafter, flue gas further flows in the exhaust pipe 14, and after urea water is injected by the injecting unit 22, flue gas passes in the first catalyst 58 and through the connecting pipe 60, and then in the second catalyst 62. When flue gas passes through the first catalyst 58 and the second catalyst 62, nitrogen oxides contained in flue gas react with ammonia produced from urea water, to reduce nitrogen oxides. Flue gas having passed through the second catalyst 62 is discharged from the exhaust pipe 14 to the air.

As described above, even when the catalyst constituting the urea SCR catalyst in the urea SCR catalytic unit 56 is divided into a plurality of numbers, and the catalysts are connected by a pipe, the injection amount of urea water can be controlled according to the reaction state between ammonia and nitrogen oxides by measuring the ammonia concentration at a position where the catalysts are arranged both on an upstream side and on a downstream side thereof in a flow direction of flue gas by the concentration measuring unit and controlling injection of urea water by the injecting unit. As shown in FIG. 4, when the urea SCR catalyst is divided into the first catalyst and the second catalyst, it is desired that a ratio between the length of the first catalyst and the length of the second catalyst in the flow direction of flue gas satisfies the relation described above, so that the measurement position is at a distance from the inlet of the urea SCR catalyst, equal to or longer than L1 and equal to or shorter than L2. That is, when it is assumed that the length of the first catalyst in the flow direction of flue gas is La, and the length of the second catalyst is Lb, it is desired that a total length of La and Lb becomes L3, that is, La+Lb=L3, and the length of La is a length between L1 and L2. As explained above, by setting a position having passed through the first catalyst to a position having passed through a region of the urea SCR catalyst of from the length L1 to the length L2 inclusive in the flow direction of flue gas, the concentration measuring unit arranged in a connecting pipe can measure the ammonia concentration in flue gas at a preferable position. Accordingly, the reaction state between nitrogen oxides and ammonia can be ascertained more accurately, and appropriate buffer can be provided to the urea SCR catalytic unit.

In the above embodiments, the injecting unit injects urea water to produce ammonia, because control is easy and urea water is easily available. However, the present invention is not limited thereto. Only ammonia needs to be supplied to the urea SCR catalyst (SCR catalyst), and gaseous ammonia can be directly injected, or ammonia water can be supplied, for example.

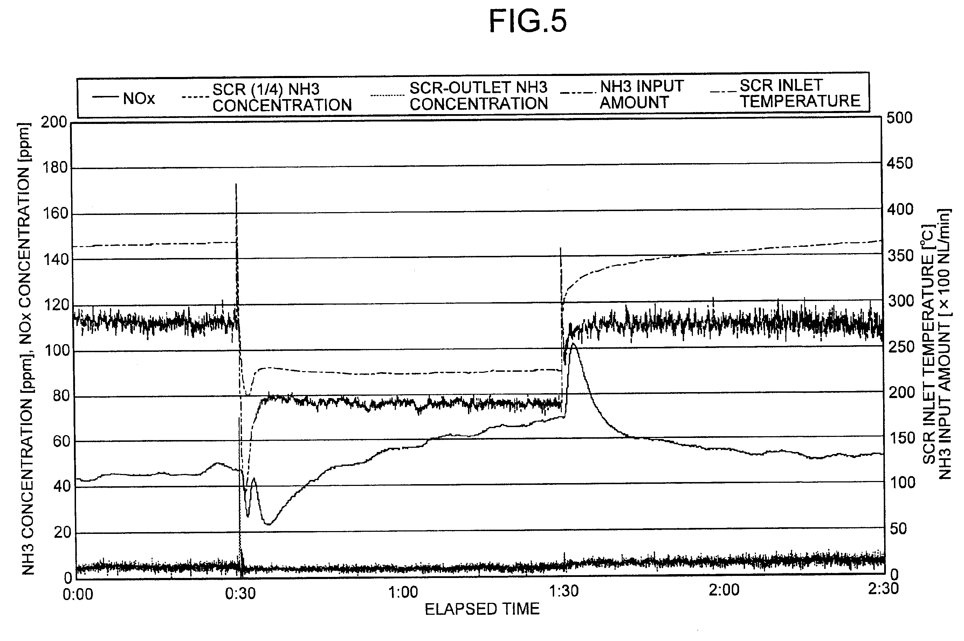

The flue gas purifying device is explained in detail with reference to experiment examples. FIGS. 5 to 8 are graphs respectively representing an example of a measurement result. In experiments described below, gaseous ammonia was supplied instead of urea water, and a 30-kW engine for power generation (manufactured by Mitsubishi Heavy Industries, Ltd) was used as the internal combustion engine. An ammonia-concentration measuring unit measured an ammonia concentration at a position shifted by 1/4, that is, 25% from an upstream side of the SCR catalyst toward a downstream side. In the experiments, the internal combustion engine was driven under certain conditions, and when a driven state was stabilized, the flow rate of flue gas discharged from the engine was decreased, and a certain amount of air (air other than flue gas) was mixed therein separately. By mixing air, not only the concentration of nitrogen oxides but also the temperature of flue gas changes, to change treatment conditions with the SCR catalyst. In such a manner, an input amount of ammonia was adjusted based on a measurement result by the ammonia-concentration measuring unit arranged at the position shifted by 1/4 from the upstream side of the SCR catalyst, when the treatment conditions changed. The control target value was made variable according to the conditions, and control was performed to reach a preset target value based on the conditions.

In this manner, conditions of flue gas passing through the flue gas purifying device were changed, and an input amount of ammonia, an ammonia concentration at the measurement position (a measurement result acquired by the measuring unit), a temperature at the inlet of the SCR catalyst, and a concentration of nitrogen oxides and ammonia in flue gas discharged from the outlet of the SCR catalyst (the flue gas purifying device) were measured. The measurement result is shown in FIG. 5. In FIG. 5, an elapsed time [a time, h] immediately after start of treatment was plotted on a horizontal axis, and the concentration of nitrogen oxides (NOx concentration) [ppm], the ammonia concentration (NH₃ concentration) [ppm], the temperature at the inlet of the SCR catalyst [°C], and the input amount of ammonia (NH₃) [x100 NL/min] were plotted on a vertical axis.

In the measurement example shown in FIG. 5, a measurement was performed by supplying only flue gas from the engine to the flue gas purifying device for 30 minutes immediately after start of treatment (from an elapsed time 0h to an elapsed time 0:30h). Thereafter, for 1 hour (from the elapsed time 0:30h to an elapsed time 1:30h), flue gas from the engine was mixed with added air (not flue gas but air mixed in flue gas) and supplied to the flue gas purifying device, and for another 1 hour (from the elapsed time 1:30h to an elapsed time 2:30h), only flue gas from the engine was supplied to the flue gas purifying device to perform a measurement. As a result of measurements of flow rate of gas (air) supplied at the time of the measurements, the flow rate of flue gas from the engine was 41 Nm³/h for 30 minutes immediately after start of treatment (from the elapsed time 0h to the elapsed time 0:30h), and for subsequent 1 hour (from the elapsed time 0:30h to the elapsed time 1:30h), the flow rate of flue gas from the engine was 24 Nm³/h, the flow rate of added air was 45 Nm³/h, and the flow rate of air flowing in the flue gas purifying device was 69 Nm³/h. Thereafter, for another 1 hour (from the elapsed time 1:30h to the elapsed time 2:30h), the flow rate of flue gas from the engine was 43 Nm³/h.

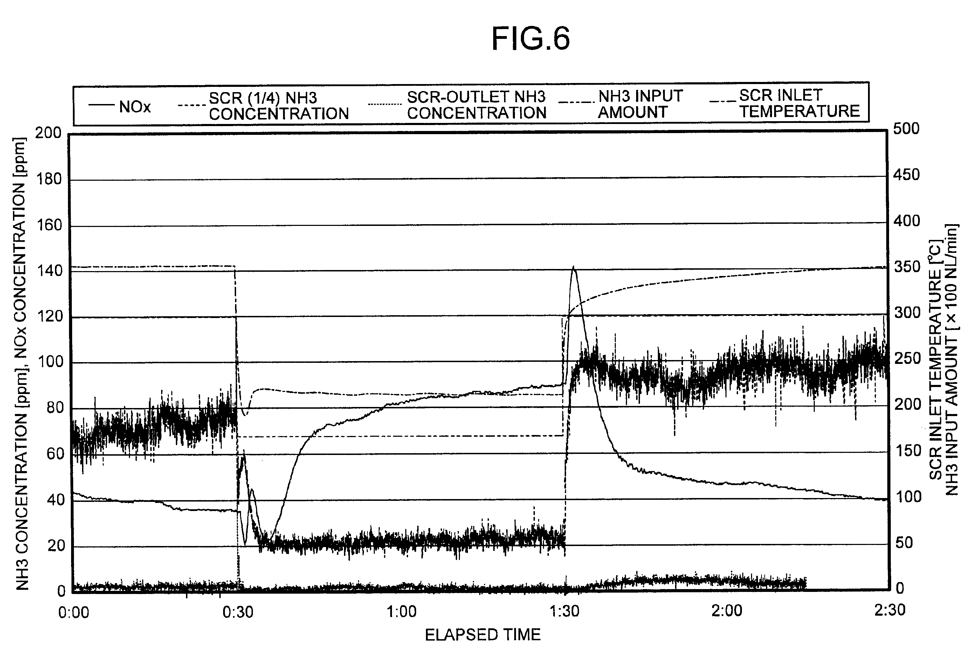

For comparison, a measurement was then performed for a case that the input amount of ammonia was controlled based on mapping data calculated beforehand. In this measurement example, because the engine was stably operated (the number of rotations, operating conditions and the like), control was performed by using an input amount of ammonia calculated from experiments under respective conditions and an input amount of ammonia calculated from experiments when a certain amount of air was mixed in ammonia. In the mapping data, an input amount of ammonia at which the concentration of nitrogen oxides discharged from the flue gas purifying device in steady state is 5 to 10 ppm is associated with the operating conditions. The measurement result is shown in FIG. 6. Vertical and horizontal axes in the graph shown in FIG. 6 are the same as those in the graph shown in FIG. 5.

Also in the measurement example shown in FIG. 6, only flue gas from the engine was supplied to the flue gas purifying device for 30 minutes immediately after start of treatment (from the elapsed time 0h to the elapsed time 0:30h). Thereafter, for 1 hour (from the elapsed time 0:30h to the elapsed time 1:30h), flue gas from the engine was mixed with added air (not flue gas but air mixed in flue gas) and supplied to the flue gas purifying device, and for another 1 hour (from the elapsed time 1:30h to the elapsed time 2:30h), only flue gas from the engine was supplied to the flue gas purifying device to perform the measurement. As a result of measurements of flow rate of gas (air) supplied at the time of the measurements, the flow rate of flue gas from the engine was 43 Nm³/h for 30 minutes immediately after start of treatment (from the elapsed time 0h to the elapsed time 0:30h), and for subsequent 1 hour (from the elapsed time 0:30h to the elapsed time 1:30h), the flow rate of flue gas from the engine was 26 Nm³/h, the flow rate of added air (not flue gas but air mixed in flue gas) was 45 Nm³/h, and the flow rate of air flowing in the flue gas purifying device was 71 Nm³/h. Thereafter, for another 1 hour (from the elapsed time 1:30h to the elapsed time 2:30h), the flow rate of flue gas from the engine was 44 Nm³/h.

As shown in FIGS. 5 and 6, by adjusting the input amount of ammonia based on the measurement result of the ammonia concentration in the SCR catalyst, leakage of nitrogen oxides as well as leakage of ammonia can be further decreased by adjusting the input amount of ammonia only based on the mapping data of the relation between operating conditions and the input amount. Particularly, such characteristics of the catalyst can be compensated that when the temperature of flue gas suddenly drops, the catalyst temperature also drops, and ammonia is not used for the reduction reaction of NOx and easily adsorbed by the catalyst, or when the temperature of flue gas suddenly rises, the catalyst temperature also rises, and ammonia adsorbed by the catalyst is released. As shown in FIG. 5, an ammonia concentration can be measured in a certain concentration or higher, at a point where the ammonia concentration is measured. That is, ammonia in a concentration higher than that of near the outlet is a measurement target, and thus changes in value can be easily detected, thereby simplifying the measurement.

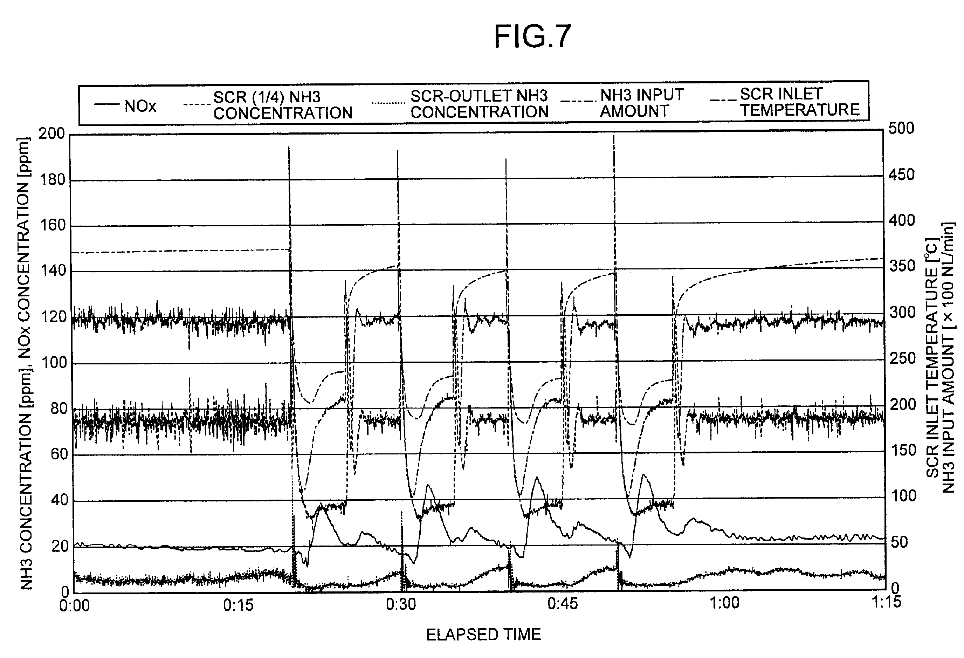

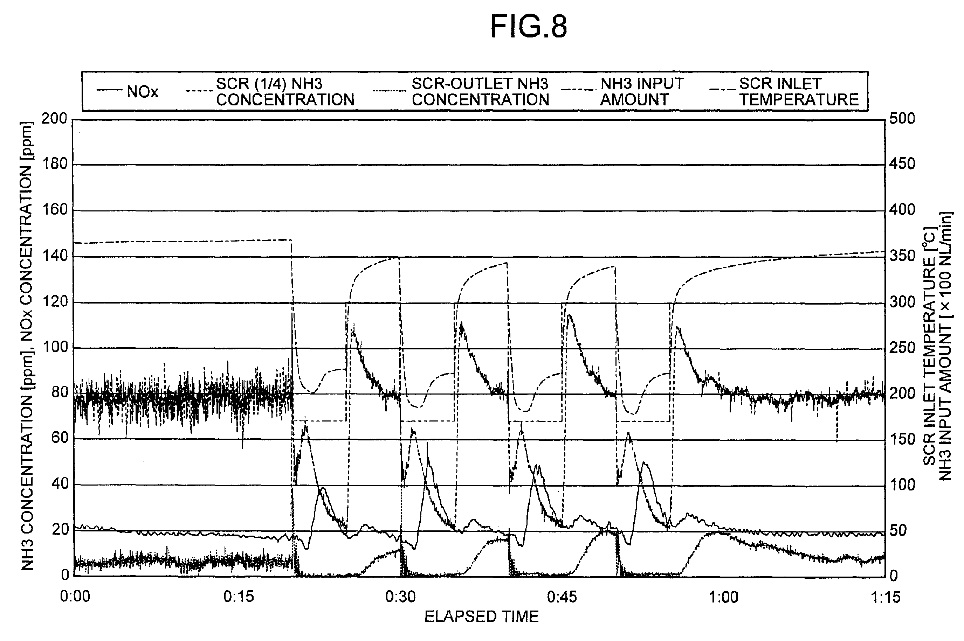

Experiments were performed also for a case that the operating conditions were repeatedly changed in a shorter time than the cases shown in FIGS. 5 and 6. The measurement result when control is performed based on the result acquired by the ammonia-concentration measuring unit is shown in FIG. 7, and the measurement result when control is performed based on the mapping data is shown in FIG. 8 for comparison. Vertical and horizontal axes in the graph shown in FIGS. 7 and 8 are the same as those in the graph shown in FIG. 5.

In the measurement example shown in FIG. 7, only flue gas from the engine was supplied to the flue gas purifying device for 20 minutes immediately after start of treatment (from the elapsed time 0h to an elapsed time 0:20h). Thereafter, a state of supplying air in which flue gas from the engine was mixed with added air and a state of supplying only flue gas from the engine were repeated every 5 minutes four times to perform measurements. As a result of measurements of flow rate of gas (air) supplied at the time of the measurements, the flow rate of flue gas from the engine was 43 Nm³/h for 20 minutes immediately after start of treatment (from the elapsed time 0h to the elapsed time 0:20h). Thereafter, for 5 minutes (from the elapsed time 0:20h to an elapsed time 0:25h), the flow rate of flue gas from the engine was 26 Nm³/h, the flow rate of added air was 45 Nm³/h, and the flow rate of air flowing in the flue gas purifying device was 71 Nm³/h. For subsequent 5 minutes (from the elapsed time 0:25h to the elapsed time 0:30h), the flow rate of flue gas from the engine was 45 Nm³/h. For subsequent 5 minutes (from the elapsed time 0:30h to an elapsed time 0:35h), the flow rate of flue gas from the engine was 26 Nm³/h, the flow rate of added air was 45 Nm³/h, and the flow rate of air flowing in the flue gas purifying device was 71 Nm³/h. For subsequent 5 minutes (from the elapsed time 0:35h to an elapsed time 0:40h), the flow rate of flue gas from the engine was 44 Nm³/h. Further, for another 5 minutes (from the elapsed time 0:40h to an elapsed time 0:45h), the flow rate of flue gas from the engine was 26 Nm³/h, the flow rate of added air was 45 Nm³/h, and the flow rate of air flowing in the flue gas purifying device was 71 Nm³/h, and for another 5 minutes (from the elapsed time 0:45h to an elapsed time 0:50h), the flow rate of flue gas from the engine was 44 Nm³/h. Thereafter, for another 5 minutes (from the elapsed time 0:50h to an elapsed time 0:55h), the flow rate of flue gas from the engine was 27 Nm³/h, the flow rate of added air was 45 Nm³/h, and the flow rate of air flowing in the flue gas purifying device was 72 Nm³/h, and for another 20 minutes (from the elapsed time 0:55h to an elapsed time 1:15h), the flow rate of flue gas from the engine was 44 Nm³/h.

Also in the measurement example shown in FIG. 8, only flue gas from the engine was supplied to the flue gas purifying device for 20 minutes immediately after start of treatment (from the elapsed time 0h to the elapsed time 0:20h). Thereafter, a state of supplying air in which flue gas from the engine was mixed with added air and a state of supplying only flue gas from the engine were repeated every 5 minutes four times to perform measurements. As a result of measurements of flow rate of gas (air) supplied at the time of the measurements, the flow rate of flue gas from the engine was 44 Nm³/h for 20 minutes immediately after start of treatment (from the elapsed time 0h to the elapsed time 0:20h). Thereafter, for 5 minutes (from the elapsed time 0:20h to the elapsed time 0:25h), the flow rate of flue gas from the engine was 27 Nm³/h, the flow rate of added air was 45 Nm³/h, and the flow rate of air flowing in the flue gas purifying device was 72 Nm³/h. For subsequent 5 minutes (from the elapsed time 0:25h to the elapsed time 0:30h), the flow rate of flue gas from the engine was 45 Nm³/h. For subsequent 5 minutes (from the elapsed time 0:30h to the elapsed time 0:35h), the flow rate of flue gas from the engine was 29 Nm³/h, the flow rate of added air was 45 Nm³/h, and the flow rate of air flowing in the flue gas purifying device was 74 Nm³/h. For subsequent 5 minutes (from the elapsed time 0:35h to the elapsed time 0:40h), the flow rate of flue gas from the engine was 45 Nm³/h. Further, for another 5 minutes (from the elapsed time 0:40h to the elapsed time 0:45h), the flow rate of flue gas from the engine was 28 Nm³/h, the flow rate of added air was 45 Nm³/h, and the flow rate of air flowing in the flue gas purifying device was 73 Nm³/h, and for another 5 minutes (from the elapsed time 0:45h to the elapsed time 0:50h), the flow rate of flue gas from the engine was 45 Nm³/h. Thereafter, for another 5 minutes (from the elapsed time 0:50h to the elapsed time 0:55h), the flow rate of flue gas from the engine was 28 Nm³/h, the flow rate of added air was 45 Nm³/h, and the flow rate of air flowing in the flue gas purifying device was 73 Nm³/h, and for another 20 minutes (from the elapsed time 0:55h to the elapsed time 1:15h), the flow rate of flue gas from the engine was 44 Nm³/h.

As shown in FIGS. 7 and 8, by adjusting the input amount of ammonia based on the measurement result of the ammonia concentration in the SCR catalyst, leakage of nitrogen oxides as well as leakage of ammonia can be further decreased by adjusting the input amount of ammonia only based on the mapping data of the relation between operating conditions and the input amount. Specifically, in the measurement example shown in FIG. 8, ammonia leaks from the outlet at the time of changing the condition; however, in the measurement example shown in FIG. 7, leakage of ammonia is suppressed. Accordingly, the leaked amount of ammonia is decreased without increasing the amount of nitrogen oxides leaking from the outlet. Particularly, it is possible to compensate such characteristics of the catalyst that, when the temperature of flue gas suddenly drops, the catalyst temperature also drops, and ammonia is not used for the reduction reaction of NOx and easily adsorbed by the catalyst, or when the temperature of flue gas suddenly rises, the catalyst temperature also rises, and ammonia adsorbed by the catalyst is released. Further, as shown in FIG. 7, the ammonia concentration can be measured in a certain concentration or higher, at a point where the ammonia concentration is measured. That is, ammonia in a concentration higher than that of near the outlet becomes a measurement target, and thus changes in value can be easily detected, thereby simplifying the measurement.

### Industrial Applicability

As described above, the flue gas purifying device according to the present invention is useful for purifying flue gas discharged from an internal combustion engine, and the flue gas purifying device is particularly suitable for purifying flue gas discharged from a diesel engine mounted on a vehicle.

### Reference Signs List

- 10, 50: vehicle
- 12: diesel engine
- 14: exhaust pipe
- 16, 52: flue gas purifying device
- 18: oxidation catalyst
- 20: DPF
- 21, 54: urea SCR system
- 22: injecting unit
- 24: urea water tank
- 26, 56: urea SCR catalytic unit
- 28, 64: concentration measuring unit
- 30: control unit
- 40: measuring unit body
- 42: optical fiber
- 44: measuring cell
- 46: light receiving unit
- 58: first catalyst
- 60: connecting pipe
- 62: second catalyst

## Claims

1. A flue gas purifying device that reduces nitrogen oxides contained in flue gas discharged from an internal combustion engine, the device comprising:
an exhaust pipe that guides flue gas discharged from the internal combustion engine;
an ammonia supplying unit that supplies ammonia into the exhaust pipe;
a catalyst unit that includes an SCR catalyst that promotes a reaction between supplied ammonia and the nitrogen oxides and a support mechanism arranged inside of the exhaust pipe to support the SCR catalyst in the exhaust pipe, and is arranged on a downstream side to a position where the ammonia is supplied in a flow direction of the flue gas;
an ammonia-concentration measuring unit that measures an ammonia concentration in flue gas at a measurement position in a region where the catalyst unit is arranged; and
an injection control unit that controls supply of ammonia performed by the ammonia supplying unit based on a measurement result acquired by the ammonia-concentration measuring unit.

2. A flue gas purifying device that reduces nitrogen oxides contained in flue gas discharged from an internal combustion engine, the device comprising:
an exhaust pipe that guides flue gas discharged from the internal combustion engine;
a urea-water injecting unit that injects urea water into the exhaust pipe;
a catalyst unit that includes a urea SCR catalyst that promotes a reaction between ammonia produced from injected urea water and the nitrogen oxides and a support mechanism arranged inside of the exhaust pipe to support the urea SCR catalyst in the exhaust pipe, and is arranged on a downstream side to a position where the urea water is injected in a flow direction of the flue gas;
an ammonia-concentration measuring unit that measures an ammonia concentration in flue gas at a measurement position in a region where the catalyst unit is arranged; and
an injection control unit that controls injection of urea water performed by the urea-water injecting unit based on a measurement result acquired by the ammonia-concentration measuring unit.

3. The flue gas purifying device according to claim 2, wherein the ammonia-concentration measuring unit detects an ammonia concentration at a position included in a region extending from a position where a concentration of nitrogen oxides at a time of maximum load of the internal combustion engine when nitrogen oxides in flue gas are reduced in a state with ammonia being input excessively into the urea SCR catalyst becomes either a concentration at an inlet of the urea SCR catalyst at a time of minimum load of the internal combustion engine or a concentration half a concentration at the inlet of the urea SCR catalyst at the time of maximum load of the internal combustion engine, whichever higher, to a position where the concentration of nitrogen oxides at the time of maximum load of the internal combustion engine becomes a theoretical concentration of nitrogen oxides that can be denitrated with an ammonia concentration of 10 ppm, in view of a flow direction of flue gas of a region of the catalytic unit in which the urea SCR catalyst is arranged.

4. The flue gas purifying device according to claim 2, wherein
the urea SCR catalyst in the catalyst unit includes a first catalyst and a second catalyst that is arranged on a downstream side to the first catalyst in a flow direction of the flue gas, and the catalyst unit further includes a connecting pipe for connecting the first catalyst and the second catalyst,
the ammonia-concentration measuring unit is arranged in the connecting pipe, and
the measurement position is in the connecting pipe.

5. The flue gas purifying device according to any one of claims 2 to 4, further comprising a particulate-matter reducing unit arranged between the urea-water injecting unit and the internal combustion engine to reduce particulate matters contained in the flue gas.

6. The flue gas purifying device according to any one of claims 1 to 5, further comprising a nitrogen-oxide-concentration measuring unit that measures a concentration of nitrogen oxides in flue gas at the measurement position.
